# FASCICULE DE BREVET EUROPEEN

(11) **EP 4 643 401 B1**
(45) Date de publication et mention de la délivrance du brevet: **01.07.2026**
(21) Numéro de dépôt: 24821127.8
(22) Date de dépôt: 19.11.2024
(51) Int. Cl.: H01M 4/70, H01M 10/04, H01M 10/0587, H01M 50/533, H01M 50/538

(54) **ÉLECTRODE POUR CELLULE DE BATTERIE CYLINDRIQUE**
ELEKTRODE FÜR ZYLINDRISCHE BATTERIEZELLE
ELECTRODE FOR CYLINDRICAL BATTERY CELL

(30) Priorité: 20.11.2023 FR 2312707
(43) Date de publication de la demande: 05.11.2025
(73) Titulaire: Verkor, 38000 Grenoble (FR)
(72) Inventeur: ACOSTA LAISEQUILLA, Rafael, 38000 GRENOBLE (FR)
(74) Mandataire: Novagraaf Group
(86) Numéro de dépôt international: PCT/FR2024/051527
(87) Numéro de publication internationale: WO 2025/109275

(56) Documents cités:
- WO-A1-2023/021183
- CN-A- 114 171 857
- CN-U- 215 644 898
- US-A1- 2020 185 700

## Description

### Domaine technique de l'invention

La présente invention concerne une électrode pour cellule de batterie cylindrique, ainsi qu'une cellule de batterie cylindrique comprenant au moins deux électrodes.

### Etat de la technique

Dans le domaine des batteries secondaires, et notamment des batteries pour véhicules électriques, il est connu de fabriquer des cellules de batterie dites cylindriques. De manière générale, de telles cellules de batterie comprennent deux électrodes : une anode et une cathode se présentant sous la forme de feuilles. Ces électrodes sont ensuite bobinées autour d'un mandrin d'enroulement pour former un enroulement principal formant la cellule de batterie cylindrique. Entre l'anode et la cathode, est disposé un séparateur configuré pour prévenir la formation d'un court-circuit entre les deux électrodes. L'enroulement principal est ensuite inséré dans un boitier servant notamment à protéger l'enroulement principal, et/ou à permettre l'insertion d'un électrolyte servant au transport des ions entre les deux électrodes.

Ces cellules de batterie présentent l'avantage de pouvoir être fabriquées facilement par un simple enroulement des bandes d'électrode et de séparateur, ce qui permet d'augmenter les cadences de production, et de diminuer ainsi les coûts.

Afin de collecter le courant généré par la cellule de batterie en fonctionnement, il est connu de l'état de la technique de prévoir que les bandes électrodes soient formées par la déposition d'un matériau actif sur une bande électriquement conductrice. Une partie de cette bande électriquement conductrice est dépourvue de matériau actif, et peut être découpée sur un des bords pour former des languettes de collecte de courant. Ainsi, une fois bobiné, l'enroulement principal comprend d'un côté des languettes connectées électriquement à l'anode, et d'un autre côté, des languettes connectées électriquement à la cathode.

Les languettes permettent de réaliser une connexion électrique entre différentes zones d'une même électrode, de sorte que la polarité de l'ensemble d'une bande d'électrode puisse être captée depuis l'extérieur de la cellule de batterie.

Pour collecter l'ensemble du courant issu de chacune des languettes, il est connu de déposer un collecteur de courant sur lesdites languettes, et de réaliser un soudage du collecteur de courant avec les languettes. Ainsi, il existe pour chacune des électrodes, un collecteur de courant. Le premier collecteur de courant peut être relié électriquement au couvercle du boîtier, et le deuxième collecteur de courant peut être électriquement connecté au boîtier, le couvercle du boîtier et le boîtier étant électriquement isolés l'un de l'autre. Il en résulte qu'un courant peut traverser le boîtier, par exemple via sa paroi cylindrique, pour fournir de l'énergie électrique au véhicule.

La connexion électrique d'un collecteur de courant est généralement réalisée en apposant ledit collecteur de courant sur les languettes. Sous l'effet de la pression exercée par le collecteur de courant, les languettes se plient. Le collecteur de courant est ensuite solidarisé aux languettes, en réalisant un soudage sur une face opposée à celle qui est en contact avec les languettes.

En effet, lors de l'application du collecteur de courant sur les languettes, il n'est pas possible de connaître avec précision l'orientation et l'agencement des languettes entre le collecteur de courant et l'enroulement principal.

Notamment en raison de la faible épaisseur des feuilles d'électrodes et donc des languettes, il est difficile de bien maîtriser le pliage des languettes de chaque côté de l'enroulement principal. Par ailleurs, le fait que les électrodes soient bobinées autour du mandrin d'enroulement induit une courbure au niveau des languettes. Ces deux effets ont des conséquences directes sur l'efficacité du pliage des languettes. En effet, le pliage induit des contraintes mécaniques telles, que la feuille d'électrode peut se déchirer endommageant ainsi l'enroulement principal. Les performances de la cellule peuvent alors être impactées. De plus, des accidents tels que des courts circuits peuvent se produire en cours d'utilisation.

Le document US 2020/185700 A1 divulgue une batterie dont une extrémité de la couche de matière active est pourvue d'une encoche, l'encoche se trouvant en fait à la fois sur la feuille de support métallique et sur la languette, et facilitant le pliage de la languette.

Le document WO 2023021183 A1 divulgue une électrode dont le collecteur de courant comprend une zone dépourvue de matière active qui comprend une pluralité de languettes (flaps) séparées les unes des autres par des encoches dans le support métallique, jusqu'à la zone recouverte de matière active.

Le document CN 215644898 U divulgue une batterie cylindrique avec une électrode négative dont le collecteur de courant comprend une languette avec une zone sur le collecteur et une zone en saillie, ladite languette comprenant des encoches 321 de part et d'autre de la ligne de pliage.

Le document CN 114171857 A divulgue une batterie cylindrique dont au moins une électrode comprend des languettes, celles-ci comprenant une zone de pliage délimitées par deux lignes de pliages définies par des encoches de part et d'autre de chaque ligne de pliage.

Il existe donc un besoin de mieux maîtriser le pliage des languettes de collecte de courant. En particulier, les industriels souhaitent conserver l'intégrité des languettes et des feuilles d'électrode au cours du pliage.

### Objet de l'invention

La présente invention a pour but de proposer une solution qui réponde à tout ou partie des problèmes précités.

Ce but peut être atteint grâce à la mise en œuvre d'une électrode pour cellule de batterie cylindrique, ladite électrode comprenant une feuille de support métallique et une couche de matériau actif d'électrode, la couche de matériau actif étant disposée sur la feuille de support métallique de manière à définir une première zone de la feuille de support métallique qui est en contact de la couche de matériau actif et une deuxième zone de la feuille de support métallique qui est dépourvue de matériau actif ; ladite deuxième zone étant disposée sur un bord périphérique de la feuille de support métallique et présentant des languettes de collecte de courant configurées pour collecter un courant électrique, lesdites languettes de collecte de courant s'étendant en saillie de la feuille de support métallique entre une partie proximale dirigée vers la couche de matériau actif et une arrête distale libre opposée à ladite partie proximale ; ladite deuxième zone comprenant au moins une encoche de pliage ménagée sur le bord périphérique de la feuille de support métallique au niveau de la partie proximale d'une des languettes de collecte de courant.

Les dispositions précédemment décrites permettent de proposer une électrode pour cellule de batterie cylindrique dans laquelle le pliage des languettes de collecte de courant est facilitée. De plus , cela permet d'éviter une déchirure de la feuille d'électrode lors du pliage des languettes de collecte de courant.

L'électrode peut en outre présenter une ou plusieurs des caractéristiques suivantes, prises seules ou en combinaison.

Selon un mode de réalisation, chaque languette de collecte de courant comprend au moins une encoche de pliage.

De cette manière, il est possible d'améliorer le pliage de toutes les languettes de collecte de courant.

Selon un mode de réalisation, au moins une des languettes de collecte de courant comprend deux encoches de pliage opposées l'une de l'autre par rapport à ladite au moins une languette de collecte de courant.

Ainsi, le pliage de cette languette de collecte de courant est davantage facilité. Cette disposition permet d'éviter une déchirure de la feuille d'électrode, lesdites encoches étant disposées à dessein à l'endroit où les contraintes mécaniques sont les plus élevées.

Selon un mode de réalisation, au moins une encoche de pliage est ménagée dans la feuille de support métallique au niveau de la partie proximale, et à l'extérieur de la languette de collecte de courant.

Ainsi, il est possible d'améliorer le pliage de la languette de courant, sans grever la robustesse de la languette de collecte de courant lors du pliage.

On entend par « à l'extérieur de la languette de collecte de courant » que l'encoche de pliage est ménagée sur une portion de la deuxième zone qui est décalée par rapport à la languette de collecte de courant le long du bord périphérique.

De manière générale, les languettes de collecte de courant comprennent deux bord latéraux sensiblement perpendiculaires au bord périphérique, et joignant l'arrête distale et la partie proximale. Dans ce cas, on entend par « à l'extérieur de la languette de collecte de courant » que l'encoche de pliage est ménagée sur une portion de la deuxième zone qui n'est pas comprise entre lesdits deux bords latéraux.

Selon un mode de réalisation, ladite au moins une encoche de pliage présente une forme générale rectangulaire.

Selon un mode de réalisation, un des côtés de l'encoche de pliage rectangulaire vient dans le prolongement d'un des bords latéraux de la languette de collecte de courant. En d'autres termes, un des côtés de l'encoche de pliage rectangulaire est confondu avec l'un des bords latéraux de la languette de collecte de courant.

Ainsi, la formation des encoches de pliage à l'extérieur des languettes de collecte de courant ne fragilise pas les languettes de collecte de courant, qui présentent généralement une épaisseur très faible. Par ailleurs, la formation d'encoches de pliages ayant un bord confondu avec un bord latéral de la languette de collecte de courant permet de simplifier la découpe du bord périphérique, et d'augmenter ainsi, les cadences de production.

Selon un mode de réalisation, l'encoche de pliage présente une largeur d'encoche mesurée le long du bord périphérique, et dans laquelle la languette de collecte de courant au niveau de laquelle est ménagée ladite encoche de pliage présente une largeur de languette mesurée le long du bord périphérique, un ratio de ladite largeur de languette et de ladite largeur d'encoche étant compris entre 1/1000 et 1/10.

Ainsi, il est possible de découper la deuxième zone pour faciliter le pliage des languettes de collecte de courant en limitant la quantité de matière retirée. L'électrode est ainsi plus robuste. Par ailleurs, les dispositions précédemment décrites permettent de ne pas trop ralentir la vitesse de découpe des encoches de pliage, ce qui permet de conserver une bonne cadence de production de l'électrode.

Selon un mode de réalisation, la deuxième zone comprend des portions de jonction, où chaque portion de jonction est disposée entre deux languettes de collecte de courant successives, et adjacente à au moins une encoche de pliage, électrode dans laquelle :
- au moins une des portions de jonction présente une hauteur de jonction mesurée perpendiculairement au long du bord périphérique, et dans laquelle
- ladite au moins une encoche de pliage adjacente à cette portion de jonction présente une profondeur d'encoche mesurée perpendiculairement au long du bord périphérique ;
un ratio de ladite profondeur d'encoche et de ladite hauteur de jonction étant compris entre 1/10 et 3/5.

De cette manière, il est possible de donner suffisamment de marge lorsque les découpes sont réalisées, pour s'assurer que la couche de matériau actif ne soit pas détériorée ou compromise.

Selon un mode de réalisation, les portions de jonctions, les languettes de collecte de courant et les encoches de pliages forment un bord périphérique en créneau.

Le but de l'invention peut également être atteint grâce à la mise en œuvre d'une cellule de batterie électrique pour véhicule électrique, ladite cellule comprenant au moins un empilement successif d'une feuille :
- d'une première électrode telle que décrite précédemment ;
- d'un premier séparateur isolant ;
- d'une deuxième électrode par exemple telle que décrite précédemment, de polarité opposée à la première électrode ;
- d'un deuxième séparateur isolant ;
ledit au moins un empilement étant enroulé sur lui-même autour d'un axe d'enroulement de sorte à former un enroulement sensiblement cylindrique.

Ainsi, il est possible de former une cellule de batterie cylindrique dans laquelle le pliage des languettes de collecte de courant est maîtrisé.

La cellule peut en outre présenter une ou plusieurs des caractéristiques suivantes, prises seules ou en combinaison.

Selon un mode de réalisation, pour au moins une électrode choisie parmi la première électrode et la deuxième électrode, chaque languette de collecte de courant est espacée de la languette de collecte de courant qui la précède le long du bord périphérique d'un intervalle variable qui augmente entre une extrémité interne de feuille disposée radialement le plus près de l'axe d'enroulement, et une extrémité externe de feuille disposée radialement le plus loin de l'axe d'enroulement.

Les dispositions précédemment décrites permettent d'aligner les languettes de collecte de courant le long d'une direction radiale, lorsque les électrodes sont enroulées pour former l'enroulement. Il est alors possible de répartir des séries de languettes de collecte de courant selon un agencement déterminé, ce qui est considéré comme plus efficace pour la collecte de courant.

Selon un mode de réalisation, dans l'enroulement, la première électrode et/ou la deuxième électrode comprend plusieurs séries comportant chacune une pluralité des languettes de collecte de courant de la première électrode et/ou de la deuxième électrode, les languettes de collecte de courant d'une série donnée étant alignées selon une direction radiale sensiblement perpendiculaire à l'axe d'enroulement depuis sensiblement l'axe d'enroulement vers une périphérie de l'enroulement.

Les dispositions précédemment décrites permettent de proposer une cellule de batterie cylindrique dans laquelle les languettes de collecte de courant sont regroupées entre elles avant l'opération de soudage avec le collecteur de courant, ce qui facilite l'opération de soudage, et limite le risque de pliage selon des directions non désirées des languettes de collecte de courant.

Selon un mode de réalisation, les languettes de collecte de courant d'une même série présentent une largeur de languette sensiblement constante, ladite largeur de languette étant mesurée perpendiculairement à la direction radiale.

Ainsi, la surface d'échange entre les différentes languettes de collecte de courant pliées entre elles est maximisée, ce qui améliore l'extraction de courant.

Le but de l'invention peut également être atteint grâce à la mise en œuvre d'un procédé de fabrication d'une électrode pour cellule de batterie cylindrique, le procédé de fabrication comprenant les étapes suivantes :
- une étape de mise à disposition d'une feuille de support métallique ;
- une étape d'enduction dans laquelle une couche de matériau actif d'électrode est enduite sur la feuille de support métallique de manière à définir une première zone de la feuille de support métallique qui est en contact de la couche de matériau actif et une deuxième zone de la feuille de support métallique qui est dépourvue de matériau actif, ladite deuxième zone étant disposée sur un bord périphérique de la feuille de support métallique ;
- une étape de découpe de languettes dans laquelle la deuxième zone est découpée pour former des languettes de collecte de courant s'étendant en saillie de la feuille de support métallique entre une partie proximale dirigée vers la couche de matériau actif et une arrête distale libre opposée à ladite partie proximale ;
- une étape de formation d'encoches, dans laquelle au moins une encoche de pliage est formée sur le bord périphérique de la feuille de support métallique au niveau de la partie proximale d'une des languettes de collecte de courant.

Les dispositions précédemment décrites permettent de fabriquer une électrode pour cellule de batterie électrique présentant des languettes de collecte de courant simples à plier.

Selon un mode de réalisation, l'étape de découpe de languettes et l'étape de formation d'encoches sont mises en œuvre simultanément.

De cette manière, le procédé de fabrication comprend moins d'étapes de fabrication, il est donc plus rapide à mettre en œuvre est moins coûteux. Cela est particulièrement adapté pour des applications industrielles à grande échelle.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
La figure 1 est une vue schématique d'une électrode selon un mode de réalisation particulier de l'invention.
La figure 2 est une vue schématique des dimensions de deux électrodes selon un mode de réalisation particulier de l'invention.
La figure 3 est une vue schématique d'une cellule de batterie selon un mode de réalisation particulier de l'invention.
La figure 4 est une vue schématique d'un procédé de fabrication selon un mode de réalisation particulier de l'invention.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

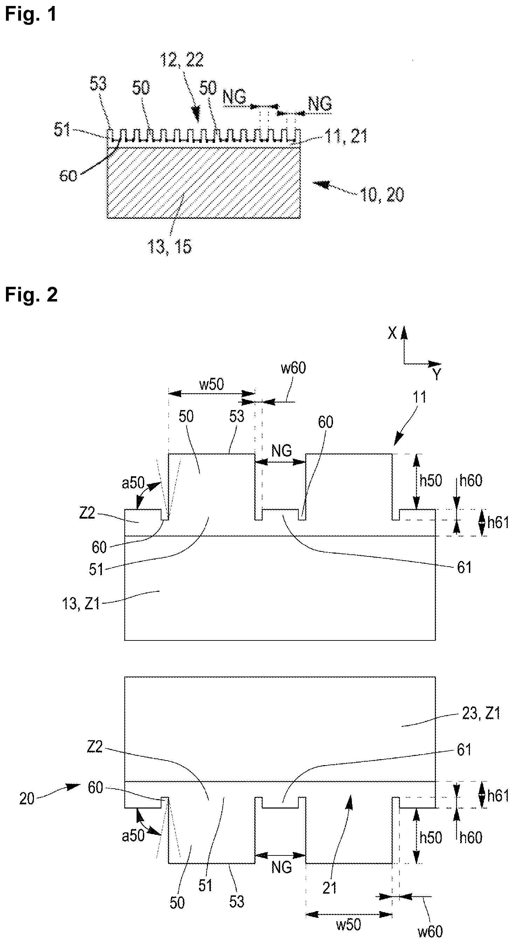

Comme cela est illustré sur les figures 1 à 3, l'invention concerne une électrode 10, 20 pour cellule 1 de batterie cylindrique ou prismatique, ainsi qu'une telle cellule 1 de batterie électrique pour véhicule électrique, par exemple un véhicule à propulsion électrique.

Comme on peut le voir sur la figure 1, la cellule 1 comprend au moins un empilement successif d'une feuille :
- d'une première électrode 10 ;
- d'un premier séparateur 15 isolant ;
- d'une deuxième électrode 20, de polarité opposée à la première électrode 10 ; et
- d'un deuxième séparateur 25 isolant.

De manière générale, la premières électrode 10 et la deuxième électrode 20 sont toutes deux selon l'invention, telle qu'elle sera décrite ci-après, il est cependant possible qu'une seule des deux électrodes 10, 20 soit une électrode selon l'invention.

La première électrode 10 et la deuxième électrode 20 peuvent chacune comprendre une feuille de support métallique 11, 21 et une couche de matériau actif 13, 23 d'électrode disposé sur ladite feuille de support métallique 11, 21.

La première électrode 10 peut notamment comprendre une première feuille métallique 11 se présentant sous la forme d'une bande fine, sur laquelle est déposé une couche d'un premier matériau actif 13. Dans le cas où la première électrode est une anode, la première feuille métallique 11 peut comprendre du cuivre. De la même manière, la deuxième électrode 20 peut comprendre une deuxième feuille métallique 21 se présentant sous la forme d'une bande fine, sur laquelle est déposé une couche d'un deuxième matériau actif 23. Dans le cas où la deuxième électrode est une cathode, la deuxième feuille métallique 21 peut comprendre de l'aluminium.

Quel que soit l'électrode 10, 20 considérée, la couche de matériau actif 13, 23 est disposée sur la feuille de support métallique 11, 21 de manière à définir une première zone Z1 de la feuille de support métallique 11, 21 qui est en contact de la couche de matériau actif 13, 23 et une deuxième zone Z2 de la feuille de support métallique 11, 21 qui est dépourvue de matériau actif 13, 23. Cette deuxième zone Z2 est disposée sur un bord périphérique 12, 22 de la feuille de support métallique 11, 21.

Généralement, la couche de premier matériau actif 13 et la couche de deuxième matériau actif 23 sont enduites chacune sur toute la longueur de la feuille de support métallique 11, 21, à l'exception de la deuxième zone Z2 formant une bande périphérique, disposée sur le bord périphérique 12, 22 de la feuille de support métallique 11, 21

La deuxième zone Z2 présente des languettes de collecte de courant 50 configurées pour collecter un courant électrique, qui s'étendent en saillie de la feuille de support métallique 11, 21 entre une partie proximale 51 dirigée vers la couche de matériau actif 13, 23 et une arrête distale 53 libre opposée à ladite partie proximale 51. Les languettes de collecte de courant 50 sont donc arrangées sur le bord périphérique 12, 22 de la feuille de support métallique 11, 21 dépourvu de matériau actif. Ces languettes de collecte de courant 50 sont décalées les unes des autres le long du bord périphérique d'une distance non nulle.

Comme on peut le voir sur les figures, ces languettes de collecte de courant 50 peuvent comprendre une forme générale rectangulaire, où deux côtés opposés sont formés par l'arrête distale 53, et la partie proximale 51. Les deux autres côtés du rectangles sont des bords latéraux de la languette de collecte de courant 50 et s'étendent sensiblement perpendiculairement au bord périphérique 12, 22.

Entre chacune des électrodes 10, 20, une bande de séparateur 15, 25 est disposée de sorte qu'aucun contact électrique ne soit possible entre la première électrode 10, et la deuxième électrode 20. Il est par ailleurs généralement prévu que la première électrode 10 et la deuxième électrode 20 soient décalées le long d'un axe d'enroulement noté « X » pour que les deuxièmes zone Z2 dépourvues de revêtement de matériau actif soient décalées de part et d'autre des bandes de séparateur 15, 25. L'au moins un empilement est enroulé sur lui-même autour de l'axe d'enroulement X de sorte à former un enroulement 30 sensiblement cylindrique. L'au moins un empilement peut également être enroulé sur lui-même de manière à former un enroulement pour cellule 1 de batterie prismatique.

Dans l'enroulement 30, la première électrode 10 et/ou la deuxième électrode 20 peuvent comprendre plusieurs séries 52 comportant chacune une pluralité des languettes de collecte de courant 50 de la première électrode 10 et/ou de la deuxième électrode 20. Les languettes de collecte de courant 50 d'une série 52 donnée peuvent alors être alignées selon une direction radiale R sensiblement perpendiculaire à l'axe d'enroulement X depuis sensiblement l'axe d'enroulement X vers une périphérie de l'enroulement 30. Par « alignées » on entend que les languettes de collecte de courant 50 se chevauchent angulairement. Les dispositions précédemment décrites permettent de proposer une cellule 1 de batterie cylindrique dans laquelle les languettes de collecte de courant 50 sont regroupées entre elles avant l'opération de soudage avec le collecteur de courant, ce qui facilite l'opération de soudage, et limite le risque de pliage selon des directions non désirées des languettes de collecte de courant 50.

Selon la variante illustrée sur les figures 1 et 2, chaque languette de collecte de courant 50 peut être espacée de la languette de collecte de courant 50 qui la précède le long du bord périphérique 12, 22 d'un intervalle variable noté « NG » qui augmente entre une extrémité interne de feuille disposée radialement le plus près de l'axe d'enroulement X, et une extrémité externe de feuille disposée radialement le plus loin de l'axe d'enroulement X. Un tel intervalle variable NG peut être défini par la formule suivante : *NG = g* + *n* * *l,* où g correspond à l'intervalle séparant la languette de collecte de courant 50 la plus proche d'un mandrin d'enroulement utilisé pour enrouler l'enroulement 30 et la languette de collecte de courant 50 qui lui succède directement, où n correspond à languette de collecte de courant 50 disposée à la n^{ième} place par rapport à la languette de collecte de courant 50 la plus proche d'un mandrin d'enroulement, et où l correspond à la longueur d'augmentation de la spirale d'enroulement en fonction de l'épaisseur de l'empilement des électrodes 10, 20, et des bandes de séparateur 15, 25. Les dispositions précédemment décrites permettent d'aligner les languettes de collecte de courant 50 d'une même série 52 le long de la direction radiale R, lorsque les électrodes 10, 20 sont enroulées pour former l'enroulement 30. Il est alors possible de répartir des séries 52 de languettes de collecte de courant 50 selon un agencement déterminé, ce qui est plus efficace pour réaliser la collecte de courant.

Bien que cela ne soit pas limitatif, il peut être avantageux de prévoir que les séries 52 soient angulairement réparties autour de l'axe d'enroulement X de manière constante. De cette manière, il est possible de réaliser une collecte de courant uniformément répartie autour de l'axe d'enroulement X. Par ailleurs, les languettes de collecte de courant 50 d'une même série 52 peuvent présenter une largeur de languette w50 sensiblement constante, ladite largeur de languette w50 étant mesurée perpendiculairement à la direction radiale R. Ainsi, la surface d'échange entre les différentes languettes de collecte de courant 50 pliées entre elles est maximisée, ce qui améliore l'extraction de courant.

Comme on peut le voir sur les figures 1 à 3, ladite deuxième zone Z2 comprend en outre au moins une encoche de pliage 60 ménagée sur le bord périphérique 12, 22 de la feuille de support métallique 11, 21 au niveau de la partie proximale 51 d'une des languettes de collecte de courant 50. La présence d'une encoche de pliage 60 permet de faciliter le pliage de la languette de collecte de courant 50 correspondante tout en évitant une déchirure de la feuille d'électrode 10, 20 lors du pliage des languettes de collecte de courant 50.

De manière avantageuse, chaque languette de collecte de courant 50 peut comprendre au moins une encoche de pliage 60. De cette manière, il est possible d'améliorer le pliage de toutes les languettes de collecte de courant 50. Plus précisément, les languettes de collecte de courant 50 peuvent comprendre deux encoches de pliage 60 opposées l'une de l'autre par rapport à ladite au moins une languette de collecte de courant 50. En d'autres termes, les encoches de pliages 60 sont ménagées dans la feuille de support métallique 11, 21 au niveau de la partie proximale 51, de part et d'autre de la languette de collecte de courant 50. Ainsi, le pliage de cette languette de collecte de courant 50 est davantage facilité. Cette disposition permet d'éviter une déchirure de la feuille d'électrode, lesdites encoches étant disposées à dessein à l'endroit où les contraintes mécaniques sont les plus élevées.

Comme on peut le voir sur les figures, les encoches de pliage 60 sont ménagées dans la feuille de support métallique 11, 21 au niveau de la partie proximale 51, et à l'extérieur de la languette de collecte de courant 50. Ainsi, il est possible d'améliorer le pliage de la languette de courant, sans grever la robustesse de la languette de collecte de courant 50 lors du pliage. On entend par « à l'extérieur de la languette de collecte de courant 50 » que l'encoche de pliage 60 est ménagée sur une portion de la deuxième zone Z2 qui est décalée par rapport à la languette de collecte de courant 50 le long du bord périphérique 12, 22. Plus précisément, selon le mode de réalisation représente, on entend par « à l'extérieur de la languette de collecte de courant 50 » que l'encoche de pliage 60 est ménagée sur une portion de la deuxième zone Z2 qui n'est pas comprise entre les deux bords latéraux de la languette de collecte de courant 50.

La figure 2 présente un mode de réalisation de la première électrode 10 et de la deuxième électrode 20, et précise des rapports de dimensions avantageux. Comme cela a été indiqué plus haut, l'électrode 10, 20 se présente généralement sous la forme d'une feuille s'étendant selon un direction d'extension notée « Y », qui correspond à la plus grande longueur de la feuille d'électrode 10, 20, c'est-à-dire la direction le long de laquelle la feuille d'électrode s'étend. L'axe d'enroulement X est alors généralement perpendiculaire à la direction d'extension.

Comme on peut le voir sur les figures, il est avantageux que les encoches de pliage 60 présentent une forme générale rectangulaire. Par exemple un des côtés de l'encoche de pliage 60 rectangulaire peut venir dans le prolongement d'un des bords latéraux de la languette de collecte de courant 50. En d'autres termes, un des côtés de l'encoche de pliage 60 rectangulaire est confondu avec l'un des bords latéraux de la languette de collecte de courant 50. Ainsi, la formation des encoches de pliage 60 à l'extérieur des languettes de collecte de courant 50 ne fragilise pas les languettes de collecte de courant 50, qui présentent généralement une épaisseur très faible. Par ailleurs, la formation d'encoches de pliages 60 ayant un bord confondu avec un bord latéral de la languette de collecte de courant 50 permet de simplifier la découpe du bord périphérique 12, 22, et d'augmenter ainsi, les cadences de production.

Chaque encoche de pliage 60 peut alors présenter une largeur d'encoche w60 mesurée le long du bord périphérique 12, 22, c'est-à-dire le long de la direction d'extension Y. La languette de collecte de courant 50 au niveau de laquelle est ménagée ladite encoche de pliage 60 peut présenter une largeur de languette w50 mesurée le long du bord périphérique 12, 22, c'est-à-dire le long de la direction d'extension Y. Dans ce cas, il peut être avantageux qu'un ratio de ladite largeur de languette w50 et de ladite largeur d'encoche w60 soit compris entre 1/1000 et 1/10. Ainsi, il est possible de découper la deuxième zone Z2 pour faciliter le pliage des languettes de collecte de courant 50 en limitant la quantité de matière retirée. L'électrode 10, 20 est ainsi plus robuste. Par ailleurs, les dispositions précédemment décrites permettent de ne pas trop ralentir la vitesse de découpe des encoches de pliage 60, ce qui permet de conserver une bonne cadence de production de l'électrode 10, 20.

Par ailleurs, l'encoche de pliage 60 peut présenter une profondeur d'encoche h60 mesurée perpendiculairement au long du bord périphérique 12, 22. Lorsque les électrode 10, 20 sont enroulées pour former l'enroulement 30, alors la profondeur d'encoche h60 est mesurée selon un axe parallèle ou confondu à l'axe d'enroulement X. De manière générale, ladite profondeur d'encoche h60 est strictement inférieure à une hauteur de languette h50 de la languette de collecte de courant 50, afin de ne pas fragiliser la base de la languette de courant 50.

La deuxième zone Z2 peut également comprendre des portions de jonction 61, où chaque portion de jonction 61 est disposée entre deux languettes de collecte de courant 50 successives. Ainsi, les portions de jonctions 61, les languettes de collecte de courant 50 et les encoches de pliages 60 forment un bord périphérique 12, 22 en créneau. Dans cette structure en créneau, les encoches de pliage 60 sont disposées en creux entre une portion de jonction 61, et une languette de collecte de courant 50.

Chaque portion de jonction 61 est adjacente à au moins une encoche de pliage 60. Les portions de jonction 61 peuvent présenter une hauteur de jonction h61 mesurée perpendiculairement au long du bord périphérique 12, 22. Il peut alors être avantageux de prévoir qu'un ratio de la profondeur d'encoche h60 et de la hauteur de jonction h61 soit compris entre 1/10 et 3/5. De cette manière, il est possible de donner suffisamment de marge lorsque les découpes sont réalisées, pour s'assurer que la couche de matériau actif 13, 23 ne soit pas détériorée ou compromise.

L'ensemble des dispositions précédemment décrites permettent de proposer une électrode 10, 20 pour cellule 1 de batterie cylindrique dans laquelle le pliage des languettes de collecte de courant 50 est facilitée. En effet, lors du pliage des languettes de collecte de courant 50, un degré de liberté angulaire a50 est permis, ce qui permet d'éviter une déchirure de la feuille d'électrode 10, 20. Cela permet en outre de former une cellule 1 de batterie cylindrique dans laquelle le pliage des languettes de collecte de courant 50 est maîtrisé.

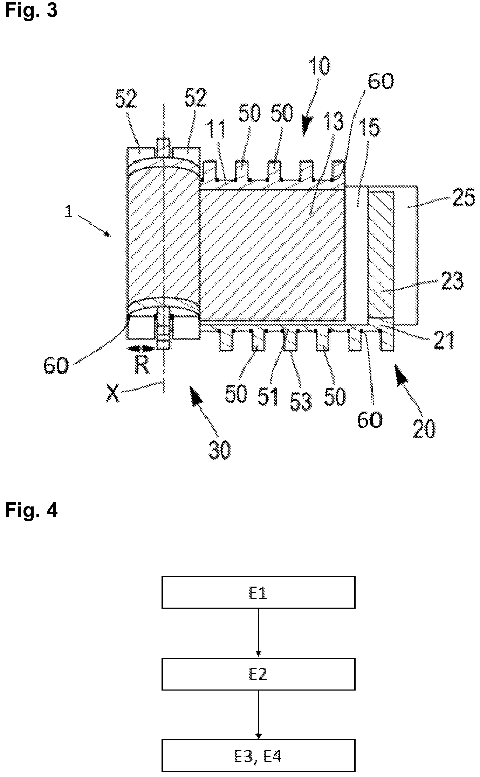

L'invention concerne également un procédé de fabrication d'une telle électrode 10, 20 pour cellule 1 de batterie cylindrique. Un mode de réalisation du procédé de fabrication est illustré sur la figure 4.

Ce procédé de fabrication comprend tout d'abord une étape de mise à disposition E1 d'une feuille de support métallique 11, 21. Ensuite, une étape d'enduction E2 est mise en œuvre dans laquelle une couche de matériau actif 13, 23 d'électrode est enduite sur la feuille de support métallique 11, 21 de manière à définir la première zone Z1 de la feuille de support métallique 11, 21 qui est en contact de la couche de matériau actif 13, 23 et la deuxième zone Z2 de la feuille de support métallique 11, 21 qui est dépourvue de matériau actif 13, 23. La deuxième zone Z2 est alors disposée sur la bord périphérique 12, 22 de la feuille de support métallique 11, 21.

Ensuite, une étape de découpe E3 de languettes est mise en œuvre, dans laquelle la deuxième zone Z2 est découpée pour former des languettes de collecte de courant 50 s'étendant en saillie de la feuille de support métallique 11, 21 entre une partie proximale 51 dirigée vers la couche de matériau actif 13, 23 et une arrête distale 53 libre opposée à ladite partie proximale 51.

Le procédé de fabrication comprend également une étape de formation d'encoches E4, dans laquelle au moins une encoche de pliage 60 est formée sur le bord périphérique 12, 22 de la feuille de support métallique 11, 21 au niveau de la partie proximale 51 d'une des languettes de collecte de courant 50.

Comme cela est illustré sur la figure 4, il est avantageux de mettre en œuvre l'étape de découpe E3 de languettes et l'étape de formation d'encoches E4 simultanément. De cette manière, le procédé de fabrication comprend moins d'étapes de fabrication, il est donc plus rapide à mettre en œuvre est moins coûteux. Cela est particulièrement adapté pour des applications industrielles à grande échelle.

Les dispositions précédemment décrites permettent de fabriquer une électrode 10, 20 pour cellule 1 de batterie électrique présentant des languettes de collecte de courant 50 simples à plier.

Une telle électrode 10, 20 peut être utilisée dans un procédé de formation d'une cellule 1 de batterie cylindrique ou prismatique. Dans ce cas, le procédé de formation de ladite cellule 1 peut comprendre les étapes du procédé de fabrication d'une électrode pour fabriquer un première électrode 10 et/ou une deuxième électrode, et une étape d'enroulement dans laquelle un empilement successif d'une feuille de la première électrode 10, d'un premier séparateur 15 isolant d'une deuxième électrode 20 de polarité opposée à la première électrode 10 et d'un deuxième séparateur 25 isolant est enroulé sur lui-même autour d'un axe d'enroulement X de sorte à former un enroulement 30 sensiblement cylindrique ou prismatique.

## Revendications

1. Electrode (10, 20) pour cellule (1) de batterie cylindrique ou prismatique, ladite électrode (10, 20) comprenant une feuille de support métallique (11, 21) et une couche de matériau actif (13, 23) d'électrode, la couche de matériau actif (13, 23) étant disposée sur la feuille de support métallique (11, 21) de manière à définir une première zone (Z1) de la feuille de support métallique (11, 21) qui est en contact de la couche de matériau actif (13, 23) et une deuxième zone (Z2) de la feuille de support métallique (11, 21) qui est dépourvue de matériau actif (13, 23) ; ladite deuxième zone (Z2) étant disposée sur un bord périphérique (12, 22) de la feuille de support métallique (11, 21) et présentant des languettes de collecte de courant (50) configurées pour collecter un courant électrique, lesdites languettes de collecte de courant (50) s'étendant en saillie de la feuille de support métallique (11, 21) entre une partie proximale (51) dirigée vers la couche de matériau actif (13, 23) et une arrête distale (53) libre opposée à ladite partie proximale (51) ; ladite deuxième zone (Z2) comprenant au moins une encoche de pliage (60) ménagée sur le bord périphérique (12, 22) de la feuille de support métallique (11, 21) au niveau de la partie proximale (51) d'une des languettes de collecte de courant (50) et à l'extérieur de ladite languette de collecte de courant (50), ladite électrode (10, 20) étant destinée à être enroulée.

2. Electrode (10, 20) selon la revendication 1, dans laquelle chaque languette de collecte de courant (50) comprend au moins une encoche de pliage (60).

3. Electrode (10, 20) selon l'une quelconque des revendications 1 ou 2, dans laquelle au moins une des languettes de collecte de courant (50) comprend deux encoches de pliage (60) opposées l'une de l'autre par rapport à ladite au moins une languette de collecte de courant (50).

4. Electrode (10, 20) selon l'une quelconque des revendications 1 à 3, dans laquelle ladite au moins une encoche de pliage (60) présente un forme générale rectangulaire.

5. Electrode (10, 20) selon l'une quelconque des revendications 1 à 4, dans laquelle l'encoche de pliage (60) présente une largeur d'encoche (w60) mesurée le long du bord périphérique (12, 22), et dans laquelle la languette de collecte de courant (50) au niveau de laquelle est ménagée ladite encoche de pliage (60) présente une largeur de languette (w50) mesurée le long du bord périphérique (12, 22), un ratio de ladite largeur de languette (w50) et de ladite largeur d'encoche (w60) étant compris entre 1/1000 et 1/10.

6. Electrode (10, 20) selon l'une quelconque des revendications 1 à 5, dans laquelle la deuxième zone (Z2) comprend des portions de jonction (61), où chaque portion de jonction (61) est disposée entre deux languettes de collecte de courant (50) successives, et adjacente à au moins une encoche de pliage (60), électrode (10,20) dans laquelle :
- au moins une des portions de jonction (61) présente une hauteur de jonction (h61) mesurée perpendiculairement au long du bord périphérique (12, 22), et dans laquelle
- ladite au moins une encoche de pliage (60) adjacente à cette portion de jonction (61) présente une profondeur d'encoche (h60) mesurée perpendiculairement au long du bord périphérique (12, 22) ;
un ratio de ladite profondeur d'encoche (h60) et de ladite hauteur de jonction (h61) étant compris entre 1/10 et 3/5.

7. Cellule (1) de batterie électrique pour véhicule électrique, ladite cellule (1) comprenant au moins un empilement successif d'une feuille :
- d'une première électrode (10) selon l'une quelconque des revendications 1 à 6 ;
- d'un premier séparateur (15) isolant ;
- d'une deuxième électrode (20) selon l'une quelconque des revendications 1 à 6, de polarité opposée à la première électrode (10) ;
- d'un deuxième séparateur (25) isolant ;
ledit au moins un empilement étant enroulé sur lui-même autour d'un axe d'enroulement (X) de sorte à former un enroulement (30) sensiblement cylindrique ou prismatique.

8. Cellule (1) selon la revendication 7, dans laquelle pour au moins une électrode (10, 20) choisie parmi la première électrode (10) et la deuxième électrode (20), chaque languette de collecte de courant (50) est espacée de la languette de collecte de courant (50) qui la précède le long du bord périphérique (12, 22) d'un intervalle variable (NG) qui augmente entre une extrémité interne de feuille disposée radialement le plus près de l'axe d'enroulement (X), et une extrémité externe de feuille disposée radialement le plus loin de l'axe d'enroulement (X).

9. Cellule (1) selon l'une quelconque des revendications 7 ou 8, dans laquelle dans l'enroulement (30), la première électrode (10) et/ou la deuxième électrode (20) comprend plusieurs séries (52) comportant chacune une pluralité des languettes de collecte de courant (50) de la première électrode (10) et/ou de la deuxième électrode (20), les languettes de collecte de courant (50) d'une série (52) donnée étant alignées selon une direction radiale (R) sensiblement perpendiculaire à l'axe d'enroulement (X) depuis sensiblement l'axe d'enroulement (X) vers une périphérie de l'enroulement (30).

10. Cellule (1) selon la revendication 9, dans laquelle les languettes de collecte de courant (50) d'une même série (52) présentent une largeur de languette (w50) sensiblement constante, ladite largeur de languette (w50) étant mesurée perpendiculairement à la direction radiale (R).

11. Procédé de fabrication d'une électrode (10, 20) pour cellule (1) de batterie cylindrique, le procédé de fabrication comprenant les étapes suivantes :
- une étape de mise à disposition (E1) d'une feuille de support métallique (11, 21) ;
- une étape d'enduction (E2) dans laquelle une couche de matériau actif (13, 23) d'électrode est enduite sur la feuille de support métallique (11, 21) de manière à définir une première zone (Z1) de la feuille de support métallique (11, 21) qui est en contact de la couche de matériau actif (13, 23) et une deuxième zone (Z2) de la feuille de support métallique (11, 21) qui est dépourvue de matériau actif (13, 23), ladite deuxième zone (Z2) étant disposée sur un bord périphérique (12, 22) de la feuille de support métallique (11, 21) ;
- une étape de découpe (E3) de languettes dans laquelle la deuxième zone (Z2) est découpée pour former des languettes de collecte de courant (50) s'étendant en saillie de la feuille de support métallique (11, 21) entre une partie proximale (51) dirigée vers la couche de matériau actif (13, 23) et une arrête distale (53) libre opposée à ladite partie proximale (51) ;
- une étape de formation d'encoches (E4), dans laquelle au moins une encoche de pliage (60) est formée sur le bord périphérique (12, 22) de la feuille de support métallique (11, 21) au niveau de la partie proximale (51) d'une des languettes de collecte de courant (50), et à l'extérieur de ladite languette de collecte de courant (50), l'électrode (10, 20) formée à l'issue de l'étape de formation d'encoches (E4) étant une électrode (10, 20) selon l'une quelconque des revendications 1 à 6.

12. Procédé de fabrication selon la revendication 11, dans lequel l'étape de découpe (E3) de languettes et l'étape de formation d'encoches (E4) sont mises en œuvre simultanément.

## Patentansprüche

1. Elektrode (10, 20) für eine zylindrische oder prismatische Batteriezelle (1), wobei die Elektrode (10, 20) eine metallische Trägerfolie (11, 21) und eine Schicht aus aktivem Elektrodenmaterial (13, 23) umfasst, wobei die Schicht aus aktivem Elektrodenmaterial (13, 23) an der metallischen Trägerfolie (11, 21) so angeordnet ist, dass sie einen ersten Bereich (Z1) der metallischen Trägerfolie (11, 21) definiert, der mit der Schicht aus aktivem Elektrodenmaterial (13, 23) in Kontakt steht und einen zweiten Bereich (Z2) der metallischen Trägerfolie (11, 21) definiert, der frei von aktivem Material (13, 23) ist; wobei der zweite Bereich (Z2) an einem Umfangsrand (12, 22) der metallischen Trägerfolie (11, 21) angeordnet ist und Stromableiterfahnen (50) aufweist, die zum Ableiten eines elektrischen Stroms ausgebildet sind, wobei die Stromableiterfahnen (50) von der metallischen Trägerfolie (11, 21) zwischen einem proximalen Teil (51), der zur Schicht aus aktivem Material (13, 23) hin ausgerichtet ist, und einer freien distalen Kante (53), die dem proximalen Teil (51) gegenüberliegt, abstehen; wobei der zweite Bereich (Z2) auf Höhe des proximalen Teils (51) einer der Stromableiterfahnen (50) und außerhalb der Stromableiterfahne (50) mindestens eine am Umfangsrand (12, 22) der metallischen Trägerfolie (11, 21) ausgebildete Biegekerbung (60) umfasst, wobei die Elektrode (10, 20) zum Aufwickeln bestimmt ist.

2. Elektrode (10, 20) nach Anspruch 1, wobei jede Stromableiterfahne (50) mindestens eine Biegekerbung (60) umfasst.

3. Elektrode (10, 20) nach einem der Ansprüche 1 oder 2, wobei mindestens eine der Stromableiterfahnen (50) zwei Biegekerbungen (60) umfasst, die in Bezug auf die mindestens eine Stromableiterfahne (50) einander gegenüberliegen.

4. Elektrode (10, 20) nach einem der Ansprüche 1 bis 3, wobei die mindestens eine Biegekerbung (60) eine im Wesentlichen rechteckige Form aufweist.

5. Elektrode (10, 20) nach einem der Ansprüche 1 bis 4, wobei die Biegekerbung (60) eine entlang dem Umfangsrand (12, 22) gemessene Kerbbreite (w60) aufweist und wobei die Stromableiterfahne (50), an der die Biegekerbung (60) ausgebildet ist, eine entlang dem Umfangsrand (12, 22) gemessene Fahnenbreite (w50) aufweist, wobei das Verhältnis der Fahnenbreite (w50) zur Kerbbreite (w60) zwischen 1/1000 und 1/10 liegt.

6. Elektrode (10, 20) nach einem der Ansprüche 1 bis 5, wobei der zweite Bereich (Z2) Verbindungsabschnitte (61) umfasst, wobei jeder Verbindungsabschnitt (61) zwischen zwei aufeinanderfolgenden Stromableiterfahnen (50) und angrenzend zu mindestens einer Biegekerbung (60) angeordnet ist, wobei in der Elektrode (10, 20):
- mindestens einer der Verbindungsabschnitte (61) eine Verbindungshöhe (h61) aufweist, die senkrecht entlang dem Umfangsrand (12, 22) gemessen wird, und wobei
- die mindestens eine an diesen Verbindungsabschnitt (61) angrenzende Biegekerbung (60) eine Kerbtiefe (h60) aufweist, die senkrecht entlang dem Umfangsrand (12, 22) gemessen wird;
wobei das Verhältnis zwischen der Kerbtiefe (h60) und der Verbindungshöhe (h61) zwischen 1/10 und 3/5 liegt.

7. Elektrobatteriezelle (1) für ein Elektrofahrzeug, die Zelle umfassend (1) mindestens eine Aufeinanderstapelung einer Folie:
- einer ersten Elektrode (10) nach einem der Ansprüche 1 bis 6;
- eines ersten isolierenden Separators (15);
- einer zweiten Elektrode (20) nach einem der Ansprüche 1 bis 6 mit entgegengesetzter Polarität zur ersten Elektrode (10);
- eines zweiten isolierenden Separators (25);
wobei die mindestens eine Aufeinanderstapelung um eine Wickelachse (X) auf sich selbst gewickelt ist, sodass sie eine im Wesentlichen zylindrische oder prismatische Wicklung (30) bildet.

8. Zelle (1) nach Anspruch 7, wobei für mindestens eine aus der ersten Elektrode (10) und der zweiten Elektrode (20) ausgewählten Elektrode (10, 20) jede Stromableiterfahne (50) von der ihr entlang dem Umfangsrand (12, 22) vorausgehenden Stromableiterfahne (50) mit einem variablen Abstand (NG) beabstandet ist, der zwischen einem inneren Folienende, das radial am nächsten an der Wickelachse (X) angeordnet ist, und einem äußeren Folienende, das radial am weitesten von der Wickelachse (X) entfernt angeordnet ist, zunimmt.

9. Zelle (1) nach einem der Ansprüche 7 oder 8, wobei in der Wicklung (30) die erste Elektrode (10) und/oder die zweite Elektrode (20) mehrere Reihen (52) umfasst, die jeweils eine Vielzahl von Stromableiterfahnen (50) der ersten Elektrode (10) und/oder der zweiten Elektrode (20) aufweisen, wobei die Stromableiterfahnen (50) einer bestimmten Reihe (52) entlang einer radialen Richtung (R), die im Wesentlichen senkrecht zur Wickelachse (X) verläuft, ausgehend von der Wickelachse (X) in Richtung eines Umfangs der Wicklung (30) ausgerichtet sind.

10. Zelle (1) nach Anspruch 9, wobei die Stromableiterfahnen (50) einer gleichen Reihe (52) eine im Wesentlichen konstante Fahnenbreite (w50) aufweisen, wobei die Fahnenbreite (w50) senkrecht zur radialen Richtung (R) gemessen wird.

11. Verfahren zur Herstellung einer Elektrode (10, 20) für eine zylindrische Batteriezelle (1), wobei das Herstellungsverfahren die folgenden Schritte umfasst:
- einen Schritt des Bereitstellens (E1) einer metallischen Trägerfolie (11, 21);
- einen Schritt des Beschichtens (E2), in dem eine Schicht aus aktivem Elektrodenmaterial (13, 23) derart auf die metallische Trägerfolie (11, 21) aufgebracht wird, dass ein erster Bereich (Z1) der metallischen Trägerfolie (11, 21) definiert wird, der mit der Schicht aus aktivem Material (13, 23) in Kontakt steht, und ein zweiter Bereich (Z2) der metallischen Trägerfolie (11, 21) definiert wird, der frei von aktivem Material (13, 23) ist, wobei der zweite Bereich (Z2) an einem Umfangsrand (12, 22) der metallischen Trägerfolie (11, 21) angeordnet ist;
- einen Schritt (E3) des Ausschneidens von Fahnen, wobei der zweite Bereich (Z2) ausgeschnitten wird, um Stromableiterfahnen (50) zu bilden, die von der metallischen Trägerfolie (11, 21) zwischen einem proximalen Teil (51), der zur Schicht aus aktivem Material (13, 23) hin ausgerichtet ist, und einer freien distalen Kante (53), die dem proximalen Teil (51) gegenüberliegt, abstehen;
- einen Schritt des Bildens von Kerbungen (E4), wobei mindestens eine Biegekerbung (60) am Umfangsrand (12, 22) der metallischen Trägerfolie (11, 21) auf Höhe des proximalen Teils (51) einer der Stromableiterfahnen (50) und außerhalb der genannten Stromableiterfahne (50) gebildet wird, wobei die nach dem Schritt des Bildens von Kerbungen (E4) gebildete Elektrode (10, 20) eine Elektrode (10, 20) nach einem der Ansprüche 1 bis 6 ist.

12. Herstellungsverfahren nach Anspruch 11, wobei der Schritt des Ausschneidens (E3) von Fahnen und der Schritt des Bildens von Kerbungen (E4) gleichzeitig durchgeführt werden.

## Claims

1. Electrode (10, 20) for a cylindrical or prismatic battery cell (1), said electrode (10, 20) comprising a metal support sheet (11, 21) and a layer of electrode active material (13, 23), the layer of active material (13, 23) being arranged on the metal support sheet (11, 21) so as to define a first zone (Z1) of the metal support sheet (11, 21) which is in contact with the layer of active material (13, 23) and a second zone (Z2) of the metal support sheet (11, 21) which is devoid of active material (13, 23); said second zone (Z2) being arranged on a peripheral edge (12, 22) of the metal support sheet (11, 21) and having current collection tabs (50) configured to collect an electric current, said current collection tabs (50) projecting from the metal support sheet (11, 21) between a proximal part (51) directed toward the layer of active material (13, 23) and a free distal edge (53) opposite said proximal part (51); said second zone (Z2) comprising at least one bending notch (60) formed on the peripheral edge (12, 22) of the metal support sheet (11, 21) at the proximal part (51) of one of the current collection tabs (50) and outside said current collection tab (50), said electrode (10, 20) being intended to be wound.

2. Electrode (10, 20) according to claim 1, in which each current collection tab (50) comprises at least one bending notch (60).

3. Electrode (10, 20) according to either of claims 1 or 2, in which at least one of the current collection tabs (50) comprises two bending notches (60) opposite each other with respect to said at least one current collection tab (50).

4. Electrode (10, 20) according to any of claims 1 to 3, in which said at least one bending notch (60) has a generally rectangular shape.

5. Electrode (10, 20) according to any of claims 1 to 4, in which the bending notch (60) has a notch width (w60) measured along the peripheral edge (12, 22), and in which the current collection tab (50) at which said bending notch (60) is formed has a tab width (w50) measured along the peripheral edge (12, 22), a ratio of said tab width (w50) and said notch width (w60) being between 1/1000 and 1/10.

6. Electrode (10, 20) according to any of claims 1 to 5, in which the second zone (Z2) comprises joining portions (61), wherein each joining portion (61) is arranged between two successive current collection tabs (50) and adjacent to at least one bending notch (60), in which electrode (10, 20):
- at least one of the joining portions (61) has a joining height (h61) measured perpendicularly to the peripheral edge (12, 22), and in which
- said at least one bending notch (60) adjacent to this joining portion (61) has a notch depth (h60) measured perpendicularly to the peripheral edge (12, 22);
a ratio of said notch depth (h60) to said joining height (h61) being between 1/10 and 3/5.

7. Electric battery cell (1) for an electric vehicle, said cell (1) comprising at least one successive stack of a sheet:
- of a first electrode (10) according to any of claims 1 to 6;
- of a first insulating separator (15);
- of a second electrode (20) according to any of claims 1 to 6, of opposite polarity to the first electrode (10);
- of a second insulating separator (25);
said at least one stack being wound on itself about a winding axis (X) so as to form a substantially cylindrical or prismatic winding (30).

8. Cell (1) according to claim 7, in which for at least one electrode (10, 20) selected from the first electrode (10) and the second electrode (20), each current collection tab (50) is spaced from the current collection tab (50) preceding it along the peripheral edge (12, 22) by a variable interval (NG) that increases between an inner sheet end arranged radially closest to the winding axis (X) and an outer sheet end arranged radially furthest from the winding axis (X).

9. Cell (1) according to either of claims 7 or 8, in which in the winding (30), the first electrode (10) and/or the second electrode (20) comprises a plurality of series (52) each having a plurality of current collection tabs (50) of the first electrode (10) and/or of the second electrode (20), the current collection tabs (50) of a given series (52) being aligned in a radial direction (R) substantially perpendicular to the winding axis (X) from substantially the winding axis (X) toward a periphery of the winding (30).

10. Cell (1) according to claim 9, in which the current collection tabs (50) of the same series (52) have a substantially constant tab width (w50), said tab width (w50) being measured perpendicular to the radial direction (R).

11. Method for manufacturing an electrode (10, 20) for a cylindrical battery cell (1), the manufacturing method comprising the following steps:
- a step (E1) of providing a metal support sheet (11, 21);
- a coating step (E2), in which a layer of electrode active material (13, 23) is coated onto the metal support sheet (11, 21) so as to define a first zone (Z1) of the metal support sheet (11, 21) which is in contact with the layer of active material (13, 23) and a second zone (Z2) of the metal support sheet (11, 21) which is devoid of active material (13, 23), said second zone (Z2) being arranged on a peripheral edge (12, 22) of the metal support sheet (11, 21);
- a step (E3) of cutting tabs, in which the second zone (Z2) is cut to form current collection tabs (50) projecting from the metal support sheet (11, 21) between a proximal part (51) directed toward the layer of active material (13, 23) and a free distal edge (53) opposite said proximal part (51);
- a step (E4) of forming notches, in which at least one bending notch (60) is formed on the peripheral edge (12, 22) of the metal support sheet (11, 21) at the proximal part (51) of one of the current collection tabs (50) and outside said current collection tab (50), the electrode (10, 20) formed as a result of the notch-forming step (E4) being an electrode (10, 20) according to any of claims 1 to 6.

12. Manufacturing method according to claim 11, in which the tab-cutting step (E3) and the notch-forming step (E4) are implemented simultaneously.
